(19) Europäisches Patentamt
European Patent Office
Office européen des brevets

(11) **EP 4 300 516 A1**

(12) **EUROPEAN PATENT APPLICATION**

(43) Date of publication:
**03.01.2024 Bulletin 2024/01**

(21) Application number: **22182227.3**

(22) Date of filing: **30.06.2022**

(51) International Patent Classification (IPC):
**G21C 1/22** *(2006.01)* **G01N 23/00** *(2006.01)*
**G01T 3/00** *(2006.01)*

(52) Cooperative Patent Classification (CPC):
**G21C 1/22; G01N 23/09;** G01N 2223/626

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Focused Energy GmbH
64293 Darmstadt (DE)**

(72) Inventors:
• **Zimmer, Marc
63225 Langen (DE)**
• **Roth, Markus
64347 Griesheim (DE)**

(74) Representative: **LifeTech IP
Spies & Behrndt Patentanwälte PartG mbB
Elsenheimerstraße 47a
80687 München (DE)**

(54) **A SENSOR DEVICE AND A METHOD FOR DETECTING FISSILE MATERIAL**

(57) A sensor device (100) for detecting fissile material (40) in a nuclear reactor (50) is disclosed. The device comprises an ion source (110), a converter (122), and a detector (130). The ion source (110) is adapted to generate an ion or electron beam (115). The converter (122) receives the generated ion or electron beam (115) and is adapted to utilize the ions to generate a neutron beam (125) and to emit the neutron beam (125). The detector (130) is adapted to receive the neutron beam (125) after the neutron beam (125) has passed the fissile material (40) and to provide a spectrum of neutrons of the received neutron beam (125).

Fig. 1

**Description**

The present invention relates to a sensor device for detecting fissile material in a nuclear reactor and a method for detecting the fissile material and, in particular, to a method for determining the concentration of fissile material in nuclear reactors during operation.

BACKGROUND

Nuclear reactors operate at high temperatures, high pressure and in a high radiation background which makes it very difficult to collect sensor data from inside the reactor. Therefore, a concentration of fissile material can barely be detected while the reactor operates. For example, a reactor chamber of a nuclear reactor cannot be provided with windows or holes for sensor devices to enable a detection of a physical quantities from the interior of the reactor.

Nevertheless, there is a need for detecting fissile material and, in particular, its concentration during operation of the nuclear reactor. This concentration measurement is not only useful for an effective operation of the nuclear reactor, but also to ensure that no fissile material is extracted during the operation of the reactor. Moreover, there is a desire to manufacture nuclear reactors that can ensure that unnoticed loss of fissile material cannot occur - which otherwise could be used for the manufacturing of nuclear weapons or for other threats. This becomes especially important for molten salt reactors, as in this case, the fissile material is solved in a liquid material. From this liquid the fissile material could be continuously extracted without any possibility to be noticed by safeguard inspectors.

Therefore, there is a demand for a sensor device which is able to detect a concentration of fissile material within a molten salt nuclear reactor during operation of this detector.

SUMMARY OF THE INVENTION

At least some of the above-mentioned problems are solved by a sensor device for detecting fissile material in a nuclear reactor according to claim 1, a molten salt reactor according to claim 10, and a method for detecting fissile material according to claim 13. The dependent claims refer to further advantageous realizations for the subject matters of the independent claims.

The present invention relates to a sensor device for detecting fissile material in a nuclear reactor. The sensor device comprises an ion source, a converter, and a detector. The ion source is adapted to generate an ion beam. The converter includes an inlet for receiving the generated ion beam. The converter is adapted to utilize the ions to generate a neutron beam and to output the neutron beam. The detector is adapted to receive the neutron beam after the neutron beam has passed the fissile material and to provide a spectrum of neutrons of the received neutron beam. The converter and the detector may be adapted to be arranged on opposite sides of at least a portion of the reactor to guide the neutron beam though the fissile material (e.g. if transmission spectra shall be detected).

Optionally, the ion source includes a laser source configured to irradiate a laser beam. The ion source may further include a laser target configured to receive the laser beam and to release the ion beam. The conversion may be a multi-stage process, where, at first, the laser will generate hot electrons at the rear surface of the target and the target surface may be ionized. Subsequently, the electrons may drag protons, deuterium nuclei, or other ions resulting in the ion beam which is emitted normal to the target surface.

Optionally, the laser target includes a deuterated target material to provide deuterium nuclei and/or protons as ions. The laser target may have a thickness of less than 1 $\mu$m or less than 2 $\mu$m and may comprise heavy water or deuterated glycol.

Optionally, the laser can be shot on a less dense material such as a gas to accelerate electrons which will be directed onto a converter to produce bremsstrahlung, which then will be used to generate neutrons via so-called gamma-to-neutron nuclear reactions inside the converter.

Optionally, the converter comprises a conversion material adapted to trigger a reaction releasing, upon ion absorption, neutrons. The moderator is adapted to reduce an energy of the released neutrons to a predetermined energy range and to emit the energy reduced neutrons as the neutron beam. The predetermined energy range may depend on the fissile material to be detected. Possible ranges are between 0.5 eV and 100 eV, or between 1 eV to 50 eV, or between 1 eV and 25 eV (measured per neutron, for example). The energy range may be adjusted by selecting the moderator material, its volume or the surface geometry accordingly. For example, the height and/or length of the moderator may be in the range between 1 cm to 20 cm resulting in multiple scattering events along a length of up 50 cm or more (the more scatter events the lower is the resulting energy of the neutrons).

Optionally, the conversion material includes at least one of the following: tungsten, lithium or lithium fluoride, beryllium, vanadium, molybdenum, copper, lead, uranium or a combination thereof. The moderator materials may also include hydrogen, polyethylene, graphite, heavy water, or other suitable materials.

Optionally, the detector is configured to provide an energy resolution for the neutrons in the neutron beam by at least one of the following:

- adjusting a distance between the moderator and the detector (to adjust a flight time for the neutron of different energy).

Optionally, the sensor device further comprises a processing unit, which is adapted to process the spectrum to detect absorption lines of isotopes of plutonium and/or uranium as fissile material. Examples of fissile material are plutonium-239, uran-235 or uran-233.

Optionally, the processing unit is configured to determine a concentration of the fissile material based on a depth of at least one spectral line in the spectrum provided by the detector and/or to issue a warning when the determined concentration leaves a predetermined range of a predetermined, acceptable concentration. The predetermined range may be defined by one or two thresholds, i.e. it can be an open or close range, and the violation of any threshold may trigger a warning.

Optionally, the ion source, the converter and/or the detector are configured to provide the neutron beam in an angular range of 30° to 150° or approximately perpendicular to the ion beams (e.g. measured relative to a main direction of the ion beam). Therefore, the neutron beam may be generated by side scattering and not by forward scattering events.

Embodiments relate also to a molten salt reactor with a sensor device as described before. The molten salt reactor may be configured to circulate a fuel salt (e.g. uranium chloride) and the sensor device may be configured to detect fissile material in the fuel salt. The reactor may be used for generating electricity through a connected turbine. Further embodiments relate also to other nuclear reactors with a sensor device as described before.

Optionally, the sensor device in the reactor is configured to monitor the concentration of the fissile material and transmit concentration values to a remote server (e.g. to enable a remote supervision of the reactor).

Optionally, the reactor comprises a reactor chamber and a heat exchanger. The sensor device can be arranged along a flow path of fuel salt between the reactor chamber and the heat exchanger and may measure a transmission spectrum of neutron transmitting the fissile material. However, according to further embodiments, the sensor device may be placed also at other positions.

Further embodiments relate to a method for detecting fissile material in a nuclear reactor. The method comprises the steps of:

- generating an ion or electron beam;
- generating a neutron beam based on the generated ion or electron beam;
- transmitting the neutron beam through the fissile material of the nuclear reactor; and
- determining a spectrum of the received neutrons in the neutron beam after passing through the fissile material to enable a monitoring of the concentration of the fissile material in the nuclear reactor.

At least some of the above-mentioned problems are overcome by embodiments by utilizing a laser-driven neutron sources to measure fissile material within a molten salt reactor. In these reactors the nuclear material is circulating through tubes to transport heat generated in a reactor chamber to a heat exchanger. In contrast to electromagnetic radiation, neutrons can easily penetrate heavy materials and interact with fissile material to generate a isotope-composition-specific spectrum. Embodiments make use of this technical effect to enable detection of fissile material even during operation of the molten salt reactor.

The laser-driven generation of neutrons allow a much higher energy resolution in the detection of isotopes of plutonium and uranium, for example. In particular, plutonium-239, uranium-235 or uranium-233 can be detected as a function of time to determine changes in their concentration during operation of the reactor.

BRIEF DESCRIPTION OF THE DRAWINGS

Various embodiments of the present invention will be described in the following by way of examples only, and with respect to the accompanying drawings, in which:

Fig. 1    depicts an embodiment for a sensor device for detecting fissile material in a nuclear reactor.
Fig. 2    depicts a simplified illustration for an exemplary molten salt reactor, which may be utilized in the detection of fissile material according to embodiments.
Fig. 3    shows a schematic flow chart for a method for detecting fissile material in a nuclear reactor according to embodiments.
Fig. 4    illustrates an exemplary spectrum for neutrons transmitting the fissile material, which are obtained according to embodiments.

## DETAILED DESCRIPTION

Various examples will now be described more fully with reference to the accompanying drawings in which some examples are illustrated.

Accordingly, while examples are capable of various modifications and alternative forms, the illustrative examples in the figures will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

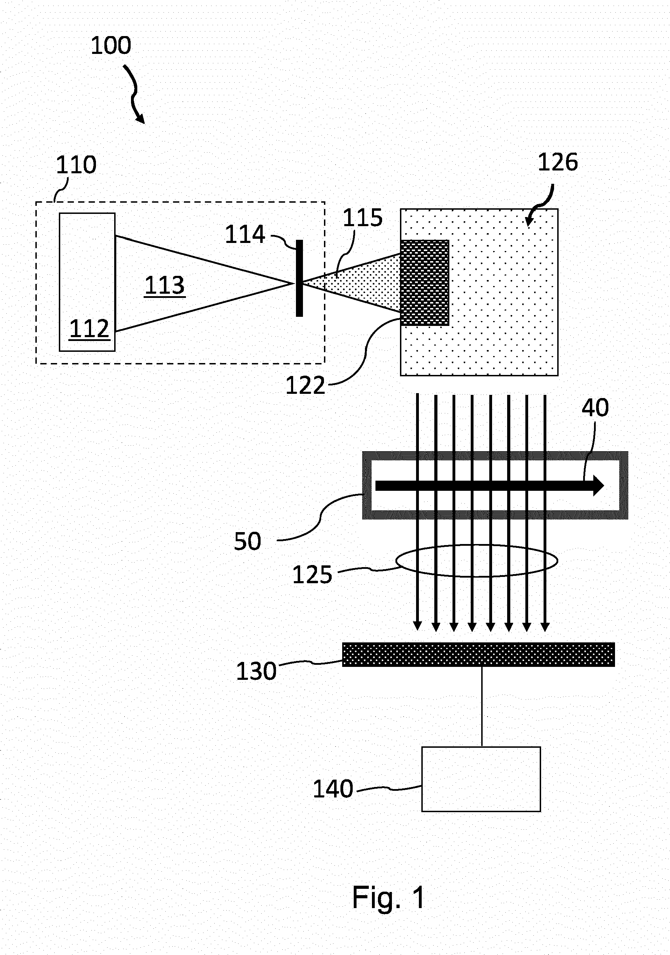

**Fig. 1** depicts an embodiment for a sensor device 100 for detecting fissile material 40 in a nuclear reactor 50 (e.g. in a pipe or another component). The sensor device 100 includes an ion or electron source 110 (particle source), a converter 122, a moderator 126, and a detector 130. The particle source 110 is adapted to generate an ion or electron beam 115 (particle beam). The converter 122 is surrounded by a moderator 126 to slow down neutrons and emits a beam of neutrons 125 at the moderator surface. The converter 122 is adapted to use the particle beams 115 to generate the neutron beam 125 and to output the neutron beam 125 towards the fissile material 40 of the nuclear reactor 50. The detector 130 is adapted to receive the neutron beam 125 after passing the fissile material 40 and to provide or determine a spectrum of the received neutrons.

According to the depicted embodiment, the particle source 110 includes a laser source 112 and a target 114. The laser source 112 irradiates a laser beam 113 on the target 114. The ion generation can be achieved as follows. A direct acceleration of ions in a laser field would need intensities in the range of $10^{24}$ W/cm$^2$ which is still out of reach for modern laser systems. Laser intensities of current system are about $10^{22}$ W/cm$^2$. Therefore, the laser energy is first transferred to hot electrons, e.g. via the photo effect followed by a subsequent laser-driven acceleration. The electrons are capable to accelerate ions via the generation of quasi-static electric fields. If only the acceleration of electrons is desired, then a less dense target material in a plasma state can be chosen to drive laser electron acceleration by the formation of density bubbles inside the plasma which follow the propagating laser beam and trap electrons and accelerate them to an energy of tens MeV to hundreds of MeV (e.g. between 1 MeV and 1 GeV or between 10 MeV and 500 MeV).

The ions released from the target 114 are, for example, protons and deuterium nuclei. According to embodiments, the target 114 may include liquid water jets, wherein hydrogen atoms are replaced by deuterium which may provide the neutrons. The laser driven neutron source, LDNS, according to embodiments operate through the acceleration of protons and deuterium nuclei via the interaction of high-intensity laser irradiation (>$10^{18}$ W/cm2) of the target 114, which may have a thickness in the sub-pm range.

The particle beam 115 is then directed to the converter 122 with a material that catches the ions (or electrons) and emits through nuclear processes the neutron beam 125. The conversion material may include: tungsten, lithium or lithium fluoride, beryllium, vanadium, molybdenum, copper, lead, uranium or a combination thereof that produce neutrons upon exposure to the ion or electron beam 115. Exemplary nuclear reactions are:

$$^{2}d + {}^{7}Li \rightarrow {}^{8}Be + n + 15.03 \text{ MeV} , \qquad (1)$$

$$^{1}p + {}^{7}Li \rightarrow {}^{7}Be + n - 1.64 \text{MeV} , \qquad (2)$$

$$\gamma + {}^{208}Pb \rightarrow {}^{207}Pb + n + 100 \text{ keV},\qquad\qquad (3)$$

wherein the superscript is the mass number for the deuterium (d), the proton (p), lithium (Li), Lead (Pb) and of beryllium (Be). The sign of the energy indicates whether there is surplus of energy or energy is needed to trigger the reaction. The energy of neutron will depend on the (kinetic) energy of the ions which in turn depend on the intensity of the laser beam 113. In general, this technique allows to generate neutrons with initial energies between 100 keV and up to 100 MeV.

However, these neutron energies are in general too high for the detection of fissile material 40. The resonance lines of interest are at lower energies. Therefore, the converter 122 is coupled to a moderator 126 which is adapted to lower the energy of the generated neutrons to a predetermined energy range (e.g. between 1 eV and 100 eV). The moderator 126 comprises specific materials such as water, beryllium, graphite, polyethylene which achieve different power energy reduction. The amount of energy reduction depends on the number of collisions and thus on the available volume through which the high energy neutrons have to travel before they leave the moderator surface. According to embodiments, the energy of the neutrons is adjusted to the desired range by selecting the materials of the conversion material and/or of the moderator material, or by using an appropriate form for the moderator (e.g. its size, the length and/or the height may be adjusted accordingly, e.g. between the 1 cm and 20 cm or up to 50 cm). Likewise, the power of the laser source can be adjusted to generate ions with higher/lower energy.

The usage of an electron beam instead of an ion beam produces lower neutron energies from 100 keV up to around 6 MeV. This increases the moderation efficiency of the produced neutrons and more of the initially produced neutrons can be slowed down to the relevant energies.

The desired energy range of the neutrons can be set around the neutron resonance that shall be detected. The following exemplary nuclear resonances exist for fissile materials:

|  |  |
|---|---|
| uranium-233: | 1.77 eV, 6.83 eV, |
| uranium-235: | 8.78 eV, 12.39 eV and 19.30 eV, |
| plutonium-239: | 7.81, 14.68 and 17.66 eV. |

It is understood that these are only approximate examples for the region between 1 eV and 20eV.

According to embodiments, the moderator 126 is configured to reduce the energy of the neutrons to a predetermined energy range which may, for example, lie between 1 eV to 25 eV or any other region of interest. The particular energy will depend on the fissile material 40 which shall be detected via neutron resonances.

According to embodiments, the neutron beam 125 is irradiated from the moderator 126 not in a forward direction of the incoming ion (or electron) beam 115 but towards the side. According to embodiments, the neutron beam 125 is emitted within an angular range of 30 to 150° (or about 90°). Thus, not the forward scattering, but the side scattering will be utilized for the neutron resonance spectroscopy. It is understood that neutrons may be emitted in all direction, but embodiments use the lateral scattered neutrons, because it turned out that these neutrons are particularly suited for the spectral analysis. For example, in this angular region, there are only little X-rays emitted that can disturb the results.

The neutron beam 125 will pass through a portion of the reactor 50 (e.g. a flat pipe with a rectangular cross section) and will propagate through the fuel salt of the reactor 50 to excite the fissile material 40 within the nuclear material. After passing through the portion of the reactor 50 with the fissile material 40 the neutron beam 125 is received by the detector 130. The detector 130 will determined the spectrum of the received neutrons and may, optionally, provide the output to a processing unit 140 which is able to detect a concentration and type of the fissile material 40 within the reactor 50.

The spectrum will indicate a density of neutrons in the neutron beam 125 as function of their energy. The energy of the neutrons can be measured simply by a time of flight measurement. Neutrons are not massless and thus their speed relates directly to their energy. The neutrons with the highest energy will arrive first at the detector 130 and the low energy neutrons will arrive later. Embodiments achieve the energy resolution by operating the laser source 112 in a pulsed mode (or intermittent operation) with a predetermined frequency. Therefore, each burst of laser irradiation 113 will generate a bunch of neutrons with energies in the adjusted energy range (e.g. between 1 eV ... 25 eV). The neutrons with highest energy will arrive first at the detector 130 and, subsequently, the energy will gradually decrease. When the next laser pulse is generated, a new bunch of neutrons is generated and can again be used for the next spectrum. Optionally, neutrons from the previous pulse with very low energies (< < 1 eV) can be removed with a Cadmium plate between the detector 130 and the reactor 50 to prevent pulses from temporally overlapping.

In addition, the processing unit 140 shall be given enough time to process the measured results.

The detection of fissile material 40 may be based on absorption or resonance spectra of the isotopes (see above resonances for uranium and plutonium for neutrons). At the resonance energy, the neutrons are easily absorbed by the nuclei and a larger number of neutrons is removed from the spectrum that it is the case for non-resonant energies.

This creates spectral absorption lines in the spectrum. The position of the lines indicate the isotope and their depth reveals the concentration

According to embodiments, the characteristic of the spectral lines (e.g. the depths of the lines) is an indication of how many neutrons have been absorbed by the fissile material 40 and thus of the concentration in the fuel salt. Therefore, embodiments determine the concentration of the isotopes of uranium and/or plutonium (or other fissile material) based on the spectral lines occurring in the detected spectrum.

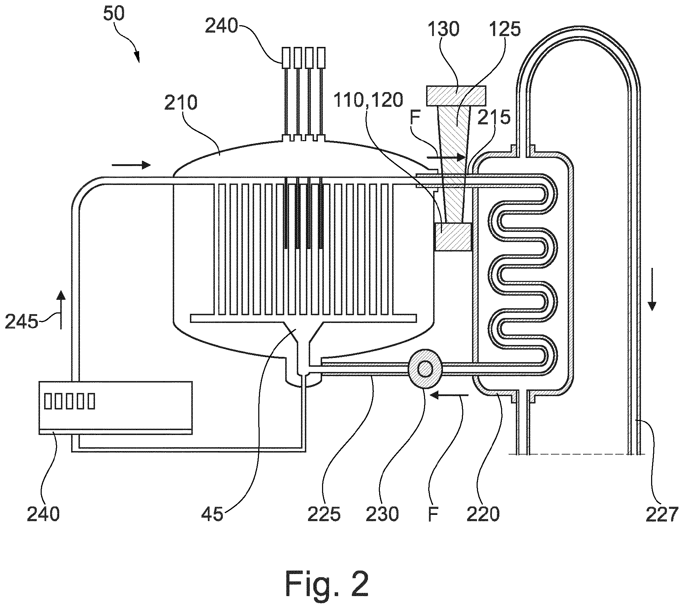

**Fig. 2** depicts a simplified illustration for an exemplary molten salt reactor 50, which maybe utilized in the detection of fissile material 40 according to embodiments. The molten salt reactor 50 includes a reactor chamber 210 and a heat exchanger 220 which are connected by connection pipes 215 and 225 and provide a circulation F for fuel salt 45 (e.g. a mixture of uranium-3-chlorid and sodium chloride). The nuclear reaction takes place in reactor chamber 210, the heated fuel salt 45 is fed through the connection pipe 215 to the heat exchanger 220 where the heat is exchanged to a fluid 227 which transfers the heat, e.g., to an electricity generating turbine (not shown). After passing the heat exchanger 220 the fuel salt 45 is transferred through a pump 230 which pumps the fuel salt 45 via the connection pipe 225 from the heat exchanger 220 back to the reactor chamber 210. The reactor chamber 210 further includes control rods 240 which control (or moderate) the nuclear reaction inside the reactor chamber 210. Finally, the molten salt reactor 50 includes a chemical processing assembly 240 for chemically purifying the salt 45, which circulates in a flow path 245.

According to embodiments, this molten salt reactor 50 is provided with the sensor device 100 as shown in Fig. 1. For example, the sensor device 100 can be placed at the connection pipe 215 from the reactor chamber 210 to the heat exchanger 220 or at any other position. According to embodiments, the reactor and/or connection pipes 215 comprises a material such as silicon carbide which can be penetrated by neutrons in the energy range of interest for causing nuclei resonances in the fissile material 40. In the energy range of interest, the cross section of interactions with wall material of the reactor 50 is low so that the neutrons generated by the sensor device 100 can pass through the wall material of the connection pipe 215 to interact with the fissile material 40 inside the pipe 215. The detector 130 maybe arranged on the opposite side from the ion/electron source 110 and the converter 120 to detect a concentration of fissile material 40 (or other nuclei) in the transmission spectrum generated by the neutrons.

As set out already, according to embodiments, the energy resolution will be achieved by arranging the detector 130 relative to the moderator 120 in a predetermined distance to spread neutrons of different energy in time.

The following concrete values serve only for illustration. Embodiments shall not be limited to the particular values.

The energy range of interest for the neutrons may be between 1 eV to 25 eV. According to embodiments, the propagation distance of the neutrons is large enough to have a time spread for the arriving neutrons at the detector 130 from 1 $\mu$s to 1 ms after their generation in the moderator 120. The lower value may be large enough to ensure that generated X-rays can be filtered, which will arrive first (because they are massless). This time spread sets the time for processing the detection events in the processing unit 140. To ensure the exemplary time period of 1 ms for processing, the frequency of the pulsed laser of the laser source 112 will be adjusted accordingly (e.g. up to 1 kHz). However, it may be lower to give the processing unit 140 more time for processing the detected events. Furthermore, the energy of the generated photons by the laser source 112 can be in the range 1 ... 100 MeV. The resulting neutron source strength could be $10^{10}$N/s.

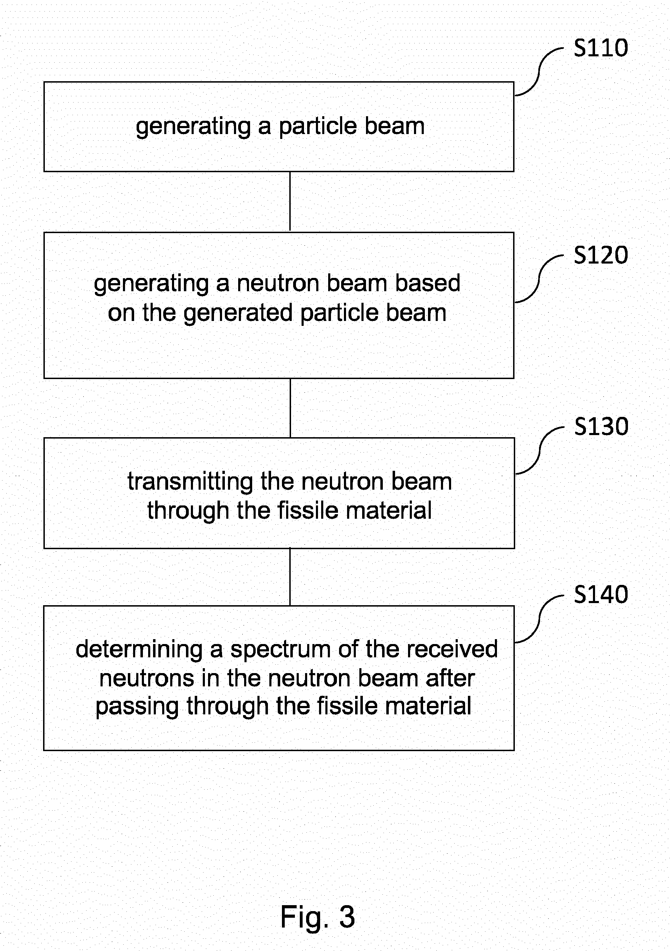

**Fig. 3** shows a schematic flow chart for a method for detecting fissile material 40 in a nuclear reactor 50. The method comprises:

- generating S110 a particle beam (ions or electrons);
- generating S120 a neutron beam based on the generated particle beam;
- transmitting S130 the neutron beam through the fissile material; and
- determining S140 a spectrum of the received neutrons in the neutron beam after passing through the fissile material.

If the particle beam utilizes electrons, these electrons generate gamma-radiation as bremsstrahlung which in turn generates the neutrons.

According to further embodiments, the step of determining the spectrum includes data processing to determine a concentration of the fissile material (e.g. based on the depth and/or width spectral lines).

According to further embodiments, the steps may be carried out continuously to provide a monitoring of the concentration of the fissile material 40 in the nuclear reactor 50. Optionally, the results can be transmitted to a remote location to monitor the nuclear reactor 50 remotely. Thus, the operation of the nuclear reactor can be controlled efficiently. This becomes important as the manufacturer of the reactor, the inspector and the operator of the powerplant may come from different countries and all might have an interest in monitoring this data. In addition, it may be ensured that no fissile material is taken out of the reactor (and is being used for weapons or other threats, for example).

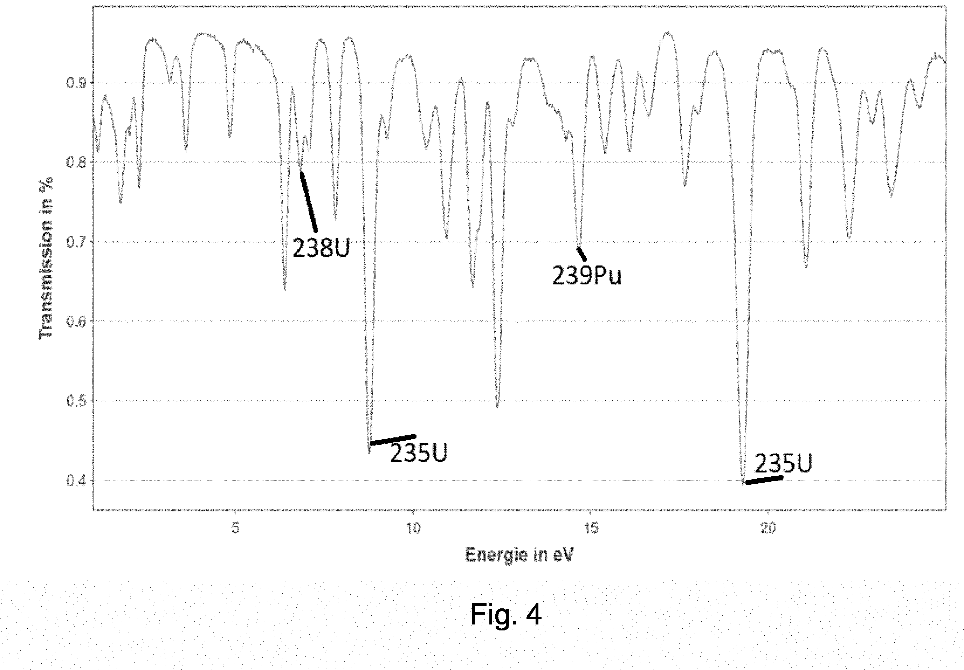

**Figs. 4** depict exemplary transmission spectra for neutrons transmitting the fissile material 40 which are obtained according to embodiments. The transmission is highly damped at resonance energies of the nuclei of the fissile material 40. Therefore, the absorption lines become visible in the spectrum. Concretely, in the spectrum the following resonances are marked:

| | |
|---|---|
| uranium-233: | 6.83 eV, |
| uranium-235: | 8.78 eV and 19.30 eV, |
| plutonium-239: | 14.68. |

Embodiments provide various advantages. For example, by using laser-driven neutron sources a much higher energy resolution is achieved, when compared to conventional neutron sources. For conventional neutron sources, the energy resolution is not sufficient to resolve the narrow resonances of the isotopes of fissile material. Moreover, laser neutron sources are significantly more compact than conventional neutron sources of comparable power. Therefore, the whole sensor device can easily be accommodated on existing nuclear reactors and provide reliable and high-quality results.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature described in one embodiment may also be realized in other embodiments. Such combinations are covered by the disclosure herein unless it is stated that a specific combination is not intended.

Although the invention has been illustrated and described in detail by way of preferred embodiments, the invention is not limited by the examples disclosed, and other variations can be derived from these by the person skilled in the art without leaving the scope of the invention. It is therefore clear that there is a plurality of possible variations. It is also clear that embodiments stated by way of example are only really examples that are not to be seen as limiting the scope, application possibilities or configuration of the invention in any way. In fact, the preceding description and the description of the figures enable the person skilled in the art to implement the exemplary embodiments in concrete manner, wherein, with the knowledge of the disclosed inventive concept, the person skilled in the art is able to undertake various changes, for example, with regard to the functioning or arrangement of individual elements stated in an exemplary embodiment without leaving the scope of the invention, which is defined by the claims and their legal equivalents, such as further explanations in the description.

List of reference signs

| | |
|---|---|
| 40 | fissile material |
| 45 | fuel salt (e.g. a mixture of uranium-3-chlorid and sodium chloride) |
| 50 | nuclear reactor |
| 100 | sensor device |
| 110 | ion source |
| 112 | laser source |
| 113 | laser beam |
| 114 | laser target |
| 115 | particle beam (ions, electrons) |
| 122 | converter |
| 125 | neutron beam |
| 126 | moderator |
| 130 | detector |
| 140 | processing unit |
| 210 | reactor chamber |
| 215, 225 | portion (e.g. pipes) of the reactor |
| 220 | heat exchanger |
| 227 | fluid (for heat exchanger) |
| 230 | pump |
| 240 | control rods for reactor chamber |
| 245 | flow path of purified salt |
| 310,320, .. | spectral lines |
| F | circulation for fuel salt |

**Claims**

1. A sensor device (100) for detecting fissile material (40) in a nuclear reactor (50), the sensor device (100) comprising:

   an ion or electron source (110) adapted to generate an ion and/or an electron beam (115);
   a converter (122) with a coupled moderator (126) for receiving the generated ion or electron beam (115), wherein the converter (122) is adapted to utilize ions of the ion beam (115) to generate a neutron beam (125) and to emit the neutron beam (125); and
   a detector (130) adapted to receive the neutron beam (125) after the neutron beam (125) has passed the fissile material (40) and to provide a spectrum of neutrons of the received neutron beam (125).

2. The sensor device (100) according to claim 1, wherein the ion source (110) includes:

   a laser source (112) configured to irradiate a laser beam (113); and
   a laser target (114) configured to receive the laser beam (113) and to release the ion or electron beam (115).

3. The sensor device (100) according to claim 2, wherein the laser target (114) includes a deuterated material to provide deuterium nuclei and/or protons as ions or electrons.

4. The sensor device (100) according to claims 2 or claim 3, wherein the detector (130) is configured to provide an energy resolution for the neutrons in the neutron beam (125) by at least one of the following:

   - adjusting a distance between the converter (120) and the detector (130).

5. The sensor device (100) according to one the preceding claims, wherein:

   the converter (122) comprises a conversion material adapted to trigger a reaction that releases, upon an ion absorption, neutrons; and
   the moderator (126) is adapted to reduce an energy of the released neutrons to a predetermined energy range and to emit the energy reduced neutrons as the neutron beam (125).

6. The sensor device (100) according to claim 5, wherein the conversion material includes at least one of the following: tungsten, lithium or lithium fluoride, beryllium, vanadium, molybdenum, copper, lead, uranium or a combination thereof, or a combination thereof.

7. The sensor device (100) according to one of the preceding claims, further comprising a processing unit (140), which is adapted to process the spectrum to detect absorption lines of isotopes of plutonium and/or uranium as fissile material.

8. The sensor device (100) according to claim 7, wherein the processing unit (140) is configured to determine a concentration of the fissile material (40) based on a depth of at least one spectral line in the spectrum provided by the detector (130) and to issue a warning when the determined concentration leaves a predetermined range of a predetermined concentration.

9. The sensor device (100) according to one of the preceding claims, wherein the ion source (110), the converter (122) and the detector (130) are configured to provide the neutron beam (125) in an angular range of 30° to 150° or approximately perpendicular measured relative to a main direction of the ion beam (115).

10. A molten salt reactor (50) with a sensor device (100) according to one of the preceding claims, wherein the reactor (50) is configured to circulate fuel salt (45) and the sensor device (100) is configured to detect the fissile material (40) in the circulating fuel salt (45).

11. The molten salt reactor (50) according to claim 10, wherein sensor device (100) is configured to monitor the concentration of the fissile material and transmit concentration values to a remote server.

12. The molten salt reactor (50) of claim 10 or claim 11, the molten salt reactor (50) comprising at least one reactor chamber (210) and a heat exchanger (220),
   wherein the sensor device (100) is arranged along a flow path of the fuel salt (45) between the reactor chamber (210) and the heat exchanger (220) and is configured to measure a transmission spectrum of neutrons transmitting the fissile material (40).

13. A method for detecting fissile material (40) in a nuclear reactor (50), the method comprising:

generating (S110) a particle beam (115);
generating (S120) a neutron beam (125) based on the generated particle beam (115);
transmitting (S130) the neutron beam (125) through the fissile material (40) of the nuclear reactor (50); and
determining (S140) a spectrum of the received neutrons in the neutron beam (125) after passing through the fissile material (40) to enable a monitoring of the concentration of the fissile material (40) in the nuclear reactor (50).

Fig. 1

Fig. 2

S110

generating a particle beam

S120

generating a neutron beam based
on the generated particle beam

S130

transmitting the neutron beam
through the fissile material

S140

determining a spectrum of the received
neutrons in the neutron beam after
passing through the fissile material

Fig. 3

Fig. 4

Europäisches Patentamt

European Patent Office

Office européen des brevets

# EUROPEAN SEARCH REPORT

Application Number

EP 22 18 2227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/200926 A1 (STUCKER DAVID L [US]) 25 June 2020 (2020-06-25) | 1,4-8,13 | INV. G21C1/22 G01N23/00 G01T3/00 |
| A | * the whole document * | 10-12 | |
| X | EZRA M ENGEL ET AL: "A physically cryptographic warhead verification system using neutron induced nuclear resonances", ARXIV.ORG, CORNELL UNIVERSITY LIBRARY, 201 OLIN LIBRARY CORNELL UNIVERSITY ITHACA, NY 14853, 2 July 2019 (2019-07-02), XP081442602, * abstract; figures * * pages 17-18 * | 1-4,9 | |
| X | KR 2010 0076487 A (KOREA NUCLEAR FUEL CO LTD [KR]) 6 July 2010 (2010-07-06) * the whole document * | 1,4,5 | |
| A | CN 106 990 428 A (NUCLEAR POWER INST CHINA) 28 July 2017 (2017-07-28) * abstract; figure 1 * | 1 | TECHNICAL FIELDS SEARCHED (IPC) G21C G01V G01N G01T |

The present search report has been drawn up for all claims

| Place of search | Date of completion of the search | Examiner |
|---|---|---|
| Munich | 25 November 2022 | Opitz-Coutureau, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 2227

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2022

| Patent document cited in search report | | Publication date | Patent family member(s) | | Publication date |
|---|---|---|---|---|---|
| US 2020200926 | A1 | 25-06-2020 | EP | 3899510 A1 | 27-10-2021 |
| | | | JP | 2022514674 A | 14-02-2022 |
| | | | KR | 20210094660 A | 29-07-2021 |
| | | | US | 2020200926 A1 | 25-06-2020 |
| | | | WO | 2020131653 A1 | 25-06-2020 |
| KR 20100076487 | A | 06-07-2010 | ES | 2391522 A1 | 27-11-2012 |
| | | | KR | 20100076487 A | 06-07-2010 |
| CN 106990428 | A | 28-07-2017 | NONE | | |

EPO FORM P0459

For more details about this annex : see Official Journal of the European Patent Office, No. 12/82